# EUROPÄISCHE PATENTANMELDUNG

(11) **EP 0 893 781 A1**
(43) Veröffentlichungstag der Anmeldung: **27.01.1999**
(21) Anmeldenummer: 98119306.3
(22) Anmeldetag: 23.08.1996
(51) Int. Cl.: G06K 19/07, G06K 7/00

(54) **Chipkarte**

(30) Priorität: 25.08.1995 DE 19531372
(62) Teilanmeldung aus: 96929324.0
(71) Anmelder: SIEMENS AKTIENGESELLSCHAFT, 80333 München (DE); Philips Semiconductors Gratkorn GmbH, 8101 Gratkorn (AT); Koninklijke Philips Electronics N.V., 5621 BA Eindhoven (NL)
(72) Erfinder: Die Erfindernennung liegt noch nicht vor
(74) Vertreter: Epping, Wilhelm, Dr.-Ing.

(57) **Zusammenfassung**

Chipkarte mit einem zumindest einen Speicher (1) enthaltenden Halbleiterchip, bei der zur Energieversorgung des Chips und zur bidirektionalen Datenübertragung von und zum Chip sowohl Kontakte (20) als auch Mittel zur kontaktlosen Datenübertragung (2) vorgesehen sind. Der Speicher (1) ist über eine Leitung (5) und eine Gleichrichterschaltung (3) direkt mit den Mitteln zur kontaktlosen Datenübertragung (2) verbunden während er nur über einen von der logischen Schaltung (8) ansteuerbaren Schalter (10) mit dem Versorgungsspannungskontakt (21) verbindbar ist.

## Beschreibung

Die Erfindung betrifft eine Chipkarte mit einem zumindest einen Speicher enthaltenden Halbleiterchip, bei der zur Energieversorgung des Chips und zur bidirektionalen Datenübertragung von und zum Chip sowohl Kontakte als auch Mittel zur kontaktlosen Datenübertragung vorgesehen sind, wobei auf dem Chip ein ansteuerbares Schaltmittel vorgesehen ist, das den Speicher in Abhängigkeit vom Zustand des Ausgangssignals einer mit zumindest dem Spannungsversorgungskontakt verbundenen logischen Schaltung mit den Kontakten oder mit Mitteln zur kontaktlosen Datenübertragung verbindet.

Eine solche Chipkarte ist bereits aus der EP 0 424 726 A1 bekannt. Dort ist die logische Schaltung mit einem Komparator gebildet, dessen einer Eingang mit dem Versorgungsspannungskontakt verbunden ist. Der andere Eingang des Komparators ist über ein Gleichrichter- und Glättungsnetzwerk mit Spulen zur kontaktlosen Energie- und Datenübertragung verbunden. Der Ausgang des Komparators steuert abhängig von den an seinen beiden Eingängen anliegenden Spannungen einen Multiplexer an, der abhängig vom Zustand des Ausgangssignals des Komparators entweder die Versorgungsspannung und die Signale von den Kontakten oder die Versorgungsspannung und Signale, die aus dem von den Spulen empfangenen Signal abgeleitet wurden zu einem ebenfalls mit dem Multiplexer verbundenen Mikroprozessor mit zugehörigem Speicher durchschaltet.

Bei der bekannten Chipkarte ist also eine selbstätige Umschaltung entweder auf die Kontakte oder auf die Spulen möglich, je nachdem, woher die Chipkarte eine Versorgungsspannung erhält. Nachteilig bei dieser Lösung ist jedoch, daß der Speicher immer mit der Eingangs/Ausgangsschnittstelle verbunden wird, die die höhere Versorgungsspannung liefert. Dadurch könnte, selbst wenn die Chipkarte in einem kontaktbehafteten Lesegerät steckt, durch Anlegen eines starken elektromagnetischen Feldes der Multiplexer umgeschaltet werden und somit ein Mißbrauch ermöglicht sein. Dies ist vor allem deshalb problematisch, weil bei solchen kombinierten Karten, bei denen Energie- und Datenübertragung sowohl über Kontakte als auch kontaktlos über Spulen erfolgen kann und die als Debitkarten eingesetzt werden, eine Entwertung der Karte normalerweise über den kontaktlosen Übertragungsweg erfolgt, während eine Aufwertung der Karte über den kontaktbehafteten Übertragungsweg erfolgt. Hierin besteht ein Anreiz für Betrüger, die Karte zu manipulieren, während sie zur Aufladung in einem kontaktbehafteten Lesegerät steckt.

Die bekannte Chipkarte weist aber auch das weitere Problem auf, daß sowohl die Versorgungsspannung von den Kontakten als auch die von den Spulen über den Multiplexer geführt wird. An einem solchen Multiplexer fällt jedoch wie an jedem elektronischen Schalter immer eine gewisse Spannung ab, die besonders beim kontaktlos-Betrieb störend ist, da dort im Normalfall über die Spulen nur eine geringe Versorgungsspannung zur Verfügung gestellt wird.

Die Aufgabe vorliegender Erfindung ist es somit, eine gattungsgemäße Chipkarte derart weiterzubilden, daß die Versorgungspannung von den Mitteln zur kontaktlosen Datenübertragung nahezu verlustlos an die Schaltung weitergeleitet wird.

Die Aufgabe wird bei einer gattungsgemäßen Chipkarte dadurch gelöst, daß der Speicher über eine Leitung direkt mit der Gleichrichterschaltung verbunden und nur über einen von der logischen Schaltung ansteuerbaren Schalter mit dem Versorgungsspannungskontakt verbindbar ist.

Hierdurch wird einerseits sichergestellt, daß beim kontaktlos-Betrieb kein Kurzschluß der Antennenspule über die Kontakte möglich ist andererseits aber auch keine Spannungsabfall an einem Schaltmittel im Versorgungspfad von dem Mittel zur kontaktlosen Datenübertragung zum Speicher erfolgt.

Bei einer vorteilhaften Weiterbildung der Erfindung ist die logische Schaltung auch mit dem Taktsignalkontakt verbunden. Die logische Schaltung ist dabei derart ausgebildet, daß sie den ansteuerbaren Schalter nur ansteuert, wenn sowohl eine Versorgungsspannung als auch ein Taktsignal an den Kontakten anliegt.

In besonders vorteilhafter Weise wird für die logische Schaltung ein Mikroprozessor verwendet. Dadurch können weitere Sicherheitsfunktionen eingeführt werden.

Besonders vorteilhaft ist es, zusätzlich zur Versorgungsspannung und einem Taktsignal auch noch ein Datensignal zu dem Mikroprozessor zu übertragen, so daß dieser den Schalter erst dann schaltet, wenn diese drei Bedingungen gleichzeitig erfüllt sind. Das Datensignal kann hierbei beispielsweise ein Befehl sein, der den Mikroprozessor veranlaßt, den Schalter zu schalten. Es kann aber auch eine persönliche Identifikationsnummer, eine sogenannte PIN sein, die im Mikroprozessor mit einer dort gespeicherten Zahl verglichen wird. Ein AN-steuern des Schalters ist dann erst möglich, wenn ein positiver Vergleich stattgefunden hat. Durch die Verwendung eines Mikroprozessors sind natürlich auch andere Authentifizierungsmöglichkeiten denkbar.

Eine besonders hohe Sicherheit ist gegeben, wenn der Speicher nur über den Mikroprozessor mit den Kontakten verbindbar ist.

Die Erfindung soll nachfolgend anhand eines Ausführungsbeispiels mit Hilfe einer Figur näher erläutert werden.

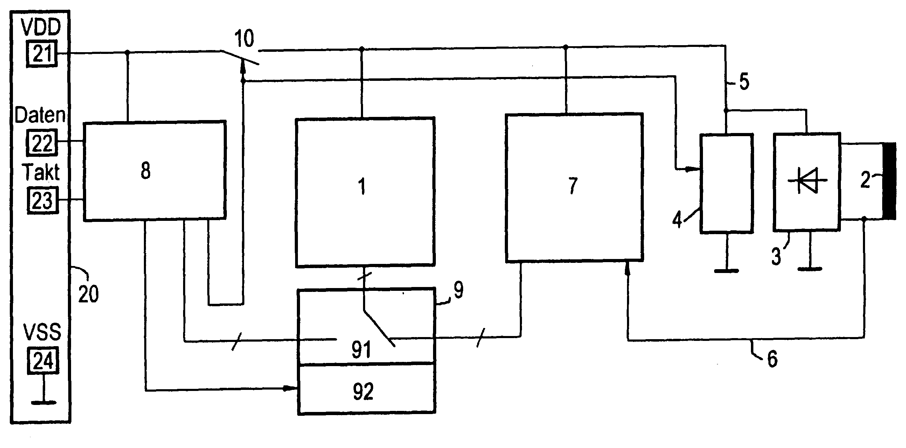

Bei der in der Figur dargestellten Prinzipschaltung ist ein Speicher 1 mit einer Spule 2 verbunden. Von der Spule 2 wird über eine erste Leitung 6 das empfangene hochfrequente Signal einer Verarbeitungsschaltung 7 zugeführt, die daraus den Takt und die Daten gewinnt und dem Speicher 1 über ein Schaltmittel 9 zuführt. Das Schaltmittel 9 nimmt eine Ruhestellung ein, in der der Schalter 91 des Schaltmittels 9 den Speicher 1 ständig über die Verarbeitungsschaltung 7 mit der Spule 2 verbindet.

Von der Spule 2 wird mittels einer Gleichrichter- und Glättungsschaltung 3 sowie einer Regelschaltung 4 eine Versorgungsspannung abgeleitet, die über eine Leitung 5 sowohl an die Verarbeitungsschaltung 7 als auch an den Speicher 1 angelegt ist.

Ein Steuerteil 92 des Schaltmittels 9 kann von einer logischen Schaltung 8, die in vorteilhafter Weise durch einen Mikroprozessor gebildet ist, angesteuert werden, so daß der Schalter 91 den Speicher 1 über den Mikroprozessor 8 mit Kontakten 20 verbindet. Diese Umschaltung kann jedoch nur erfolgen, wenn eine Versorgungsspannung VDD an einem Versorgungsspannungskontakt 21 der Kontakte 20 anliegt und den Mikroprozessor 8 versorgt.

Das Schaltmittel 9 kann nur vom Mikroprozessor 8 angesteuert werden, so daß es nicht möglich ist, durch Signale an der Spule 2, den Schalter 91 wieder in seine Ruhestellung zu bringen, so daß der Speicher 1 wieder mit der Spule 2 verbunden ist. Dies ist nur möglich, wenn keine Versorgungsspannung VDD mehr am Mikroprozessor 8 anliegt.

Der Mikroprozessor 8 kann derart ausgebildet sein, daß eine Ansteuerung des Schaltmittels 9 nur dann erfolgt, wenn außer der Versorgungsspannung VDD an einem Taktsignalkontakt 23 ein Taktsignal anliegt.

In weiterer vorteilhafter Ausgestaltung der Erfindung gibt der Mikroprozessor 8 erst dann ein Steuersignal an das Schaltmittel 9, wenn vorher ein Datensignal über einen Datenkontakt 22 übertragen wurde. Durch diese Maßnahme kann dafür gesorgt werden, daß ein Verändern der im Speicher 1 abgespeicherten Daten über den Mikroprozessor 8 erst möglich ist, nachdem ein spezielles Datensignal über den Datenkontakt 22 zum Mikroprozessor 8 übertragen wurde.

Es ist weiterhin ein Schalter 10 vorgesehen, der die am Versorgungsspannungskontakt 21 anliegende Versorgungsspannung VDD erst dann an den Speicher anlegt, wenn er durch ein entsprechendes Signal vom Mikroprozessor 8 angesteuert wurde. Dieses Steuersignal kann natürlich gleich dem Steuersignal für den Steuerteil 92 des Schaltmittels 9 sein.

Dieses Steuersignal kann noch zu anderen Zwecken verwendet werden: die Regeleinrichtung 4 soll verhindern, daß die Versorgungsspannung für den Speicher 1 und die Verarbeitungsschaltung 7 zu hoch wird, was geschehen kann, wenn die Karte zu nahe an eine Sendespule kommt. Der Spannungsbegrenzer in dieser Regelschaltung hat einen gewissen Streubereich, zum Beispiel von 4,5 bis 5,5 V. Falls ein bestimmter Spannungsbegrenzer bei 4,5 V liegt und die Karte in einem Kontaktlesegerät betrieben wird, kann es geschehen, daß eine Versorgungsspannung über den Versorgungsspannungskontakt 21 eingeprägt wird, die größer als diese 4,5 V ist, wodurch der Spannungsregler thermisch gefährdet ist. Mit dem Steuersignal kann der Spannungsbegrenzer um- bzw. abgeschaltet werden.

Der Schalter 10 dient zwar einerseits dazu, den Speicher 1 bei Kontaktbetrieb erst nach einem Steuersignal von dem Mikroprozessor 8 an die Versorgungsspannung VDD anzuschließen, er sorgt andererseits aber auch dafür, daß die Versorgungsspannung, die bei kontaktlosem Betrieb über die Leitung 5 von der Spule 2 an den Speicher 1 und die Verarbeitungsschaltung 7 angelegt wird, nicht zum Mikroprozessor 8 gelangt. Dies hat einerseits den Vorteil, daß der Mikroprozessor 8 nicht über die Spule 2 betrieben werden kann, es hat aber auch den weiteren Vorteil, daß bei kontaktlosem Betrieb ein geringer Energieverbrauch gewährleistet ist. Es kann jedoch durchaus wünschenswert sein, in der Versorgungsspannungsleitung auf dem integrierten Halbleiterchip keinen Schalter zu benötigen, da dieser immer einen Spannungsabfall und damit eine Einschränkung des Versorgungsspannungsbereich bedeutet. So wäre es auch denkbar, den Ausgang des Gleichrichters 3 bzw. der Regelschaltung 4 über die Leitung 5 mit dem Versorgungsspannungskontakt 21 zu verbinden. Da die Stromaufnahne einer Schaltung oft von der Taktfrequenz abhängt, kann man dann dadurch Strom sparen, daß nicht benötigte Teile nicht getaktet werden. Bei kontaktlosem Betrieb liegt kein Taktsignal an den Kontakten an, so daß der Schaltungsteil für den Kontaktbetrieb, insbesondere der Mikroprozessor 8 an Versorgungsspannung liegen kann, ohne wesentlich Strom zu verbrauchen.

## Patentansprüche

1. Chipkarte mit einem zumindest einen Speicher (1) enthaltenden Halbleiterchip,
bei der zur Energieversorgung des Chips und zur bidirektionalen Datenübertragung von und zum Chip sowohl Kontakte (20) als auch Mittel zur kontaktlosen Datenübertragung (2) vorgesehen sind,
wobei den Mitteln zur kontaktlosen Datenübertragung (2) eine Gleichrichterschaltung (3) nachgeschaltet ist und
wobei auf dem Chip eine mit zumindest den Spannungsversorgungs-Kontakten (21, 24) verbundene logische Schaltung (8) angeordnet ist,
**dadurch gekennzeichnet**,
daß der Speicher (1) über eine Leitung (5) direkt mit der Gleichrichterschaltung (3) verbunden und nur über einen von der logischen Schaltung (8) ansteuerbaren Schalter (10) mit dem Versorgungsspannungskontakt (21) verbindbar ist.

2. Chipkarte nach Anspruch 1, **dadurch gekennzeichnet**,
daß die logische Schaltung (8) auch mit dem Taktsignalkontakt (23) verbunden ist und den ansteuerbaren Schalter (10) nur ansteuert, wenn sowohl eine Versorgungsspannung (VDD) als auch ein Taktsignal vorliegt.

3. Chipkarte nach einem der vorhergehenden Ansprüche, **dadurch gekennzeichnet**,
daß die logische Schaltung (8) mit einem Mikroprozessor gebildet ist.

4. Chipkarte nach Anspruch 3, **dadurch gekennzeichnet**,
daß nur bei Vorliegen einer Versorgungsspannung (VDD), eines Taktsignals und eines Datensignals an den mit dem Mikroprozessor (8) verbundenen Kontakten (20) der ansteuerbare Schalter (10) vom Mikroprozessor (8) angesteuert ist und die Kontakte (20) mit dem Speicher (1) verbindet.

5. Chipkarte nach Anspruch 3 oder 4, **dadurch gekennzeichnet**,
daß der Speicher (1) nur über den Mikroprozessor (8) mit den Kontakten (20) verbindbar ist.
